# FASCICULE DE BREVET EUROPEEN

(11) **EP 2 286 571 B1**
(45) Date de publication et mention de la délivrance du brevet: **12.10.2016**
(21) Numéro de dépôt: 09769470.7
(22) Date de dépôt: 14.05.2009
(51) Int. Cl.: H04L 29/08

(54) **PROCÉDÉ ET ÉQUIPEMENT DE STOCKAGE DE DONNÉES EN LIGNE**
VERFAHREN UND VORRICHTUNG ZUR SPEICHERUNG VON ONLINEDATEN
METHOD AND DEVICE FOR STORING ONLINE DATA

(30) Priorité: 02.06.2008 FR 0802990
(43) Date de publication de la demande: 23.02.2011
(73) Titulaire: ALCATEL LUCENT, 92100 Boulogne-Billancourt (FR)
(72) Inventeur: DORBES, Guillaume, F-91620 Nozay (FR); HUE, Cyril, 92130 Issy Les Moulineaux (FR)
(74) Mandataire: ALU Antw Patent Attorneys
(86) Numéro de dépôt international: PCT/FR2009/050902
(87) Numéro de publication internationale: WO 2009/156629

(56) Documents cités:
- US-A1- 2006 136 548
- US-B1- 6 795 860

## Description

La présente invention concerne un procédé de stockage de données en ligne.

Suite à la généralisation des équipements numériques et au développement de programmes informatiques nécessitant un grand nombre de données, la demande d'espaces de stockage est toujours plus grande. Cette demande couplée avec la facilité d'échanges de données que procure le réseau Internet ont conduit au développement d'espaces de stockage ou de sauvegarde en ligne. Néanmoins, dans l'état de la technique, les offres de stockage en ligne ne permettent pas un large choix concernant la qualité de service de l'espace de stockage. En effet, il existe une multitude d'offres de stockage de données banalisées mais, dans l'état de la technique, ces offres sont généralement des espaces de stockage localisés à un endroit précis et loués par leur propriétaire, l'échange de données entre le client et l'espace de stockage se faisant sous forme de transfert « peer-to-peer ». Ainsi, le choix des différents paramètres de stockage est limité et la sécurité des données durant leur transfert n'est pas contrôlée. Or, suivant le type et l'importance des données à stocker ou sauvegarder, les besoins ne sont pas les mêmes en terme de performance, de sûreté de stockage ou de disponibilité par exemple.

Le document D1 US 6 795 860 B1 (SHAH DHAVAL N [US]) 21 septembre 2004 (2004-09-21) décrit un procédé de réservation d'un espace de service en ligne.

La présente invention a donc pour objectif de résoudre les inconvénients précités de l'état de la technique et de proposer un procédé de stockage de données en ligne à espaces de stockage multiples permettant à l'utilisateur de définir la qualité de service désirée et d'obtenir la solution la plus adaptée à ses besoins parmi la multitude d'offres proposées sur le réseau.

A cet effet l'invention concerne un procédé de réservation d'un espace de stockage de données en ligne comprenant:
- la réception d'une requête de stockage contenant un ensemble de paramètres dont au moins un paramètre correspondant à une qualité de service de stockage,
- l'analyse dudit ensemble de paramètres,
- la création et la transmission vers des unités de stockage de données en ligne d'une requête de réservation correspondant à cet ensemble de paramètres,
- la réception des réponses à la requête de réservation venant des unités de stockage de données en ligne,
- la sélection, parmi les réponses reçues, d'une unité de stockage en ligne en fonction de l'ensemble des paramètres définis dans la requête de stockage,
- la création d'une clé de réservation permettant l'accès à l'espace de stockage sélectionné,
- la transmission de ladite clé de réservation et de l'adresse de l'espace de stockage sélectionné.

Selon un mode de réalisation, ladite clé de réservation est cryptée.

Selon un autre mode de réalisation, la création d'une requête de stockage comprend :
- un identifiant de ladite requête,
- un identifiant utilisateur,
- la définition de la taille de l'espace de stockage et la qualité de service associée.

Selon un mode de réalisation complémentaire, ledit au moins un paramètre correspondant à une qualité de service associée comprend au moins un paramètre de la liste suivante :
- un taux de disponibilité,
- un niveau de performance,
- un niveau de sécurité sismique,
- un coût du stockage,
- un niveau de performance.

Selon un autre mode de réalisation, les échanges de données sont sécurisés par l'utilisation d'un protocole de sécurisation.

Selon un mode de réalisation complémentaire, la confidentialité des données est assurée par l'utilisation d'un programme de cryptographie.

La présente invention concerne également un serveur d'allocation de stockage comprenant au moins un moyen de traitement adapté pour :
- la réception d'une requête de stockage contenant un ensemble de paramètres dont au moins un paramètre correspondant à une qualité de service de stockage,
- l'analyse dudit ensemble de paramètres,
- la création et la transmission vers des unités de stockage de données en ligne d'une requête de réservation correspondant à cet ensemble de paramètres,
- la réception d'au moins une réponse à la requête de réservation venant des unités de stockage de données en ligne,
- la sélection, parmi les réponses reçues, d'une unité de stockage en ligne en fonction de l'ensemble des paramètres définis dans la requête de stockage,
- la création d'une clé de réservation permettant l'accès à l'espace de stockage sélectionné,
- la transmission de ladite clé de réservation et de l'adresse de l'espace de stockage sélectionné.

Elle concerne en outre un terminal client comprenant au moins un moyen de traitement adapté permettant :
- la création d'une requête de stockage contenant un ensemble de paramètres dont au moins un paramètre correspondant à une qualité de service de stockage,
- la transmission de ladite requête de stockage vers un serveur d'allocation de stockage,
- la réception d'une adresse d'un espace de stockage et d'une clé de réservation.

De plus, l'invention concerne un agent de stockage comprenant au moins un moyen de traitement adapté permettant:
- la réception d'une requête de réservation,
- la recherche et la réservation d'espaces de stockage correspondant aux paramètres contenus dans la requête de réservation dont au moins un paramètre correspondant à une qualité de service de stockage,
- la transmission d'au moins une réponse contenant au moins une information sur l'espace de stockage sélectionné et les paramètres associés dont ledit au moins un paramètre correspondant à une qualité de service de stockage.

D'autres caractéristiques et avantages de l'invention apparaîtront de la description qui va maintenant en être faite, en référence aux dessins annexés qui en représentent, à titre indicatif mais non limitatif, un mode de réalisation possible.

Sur ces dessins:

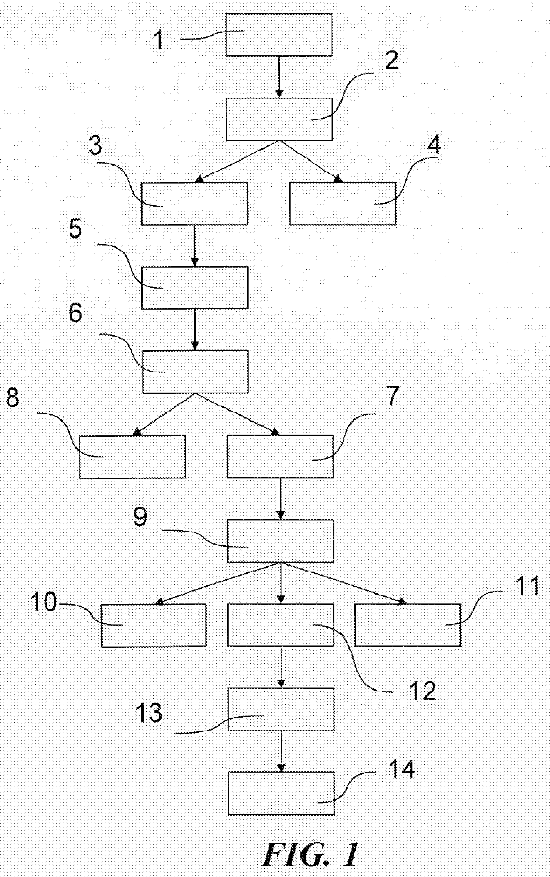

- la figure 1 est un organigramme représentant les différentes étapes de la présente invention;

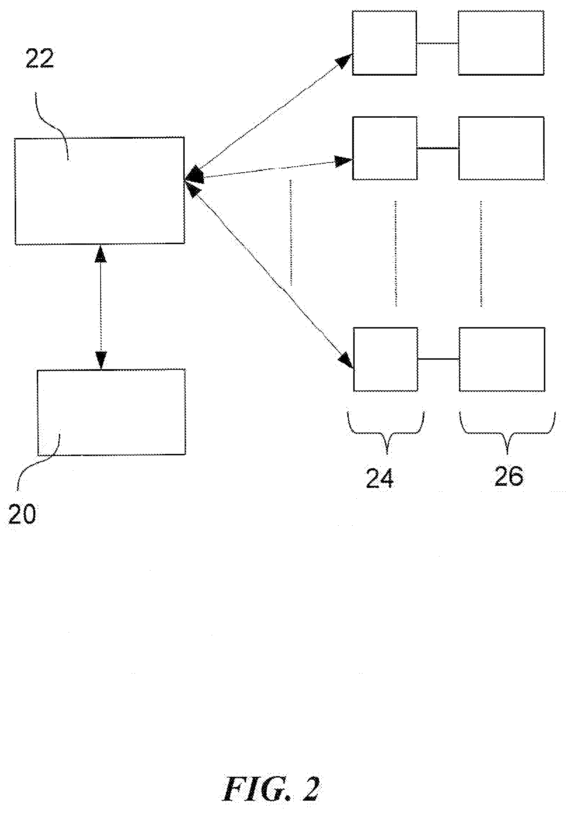

- la figure 2 est un schéma représentant les différents éléments de la présente invention et leurs interactions;
- les figures 3 et 4 représentent un tableau des niveaux de qualités de service requis dans 2 requêtes de stockage différentes;

Le procédé selon l'invention va maintenant être décrit plus en détail en référence aux figures.

Le procédé de la présente invention commence par la création d'une requête de stockage (étape 1).

Cette requête est créée au niveau du terminal client 20 et comprend au moins les paramètres suivants:
- un identifiant de la requête,
- un identifiant d'utilisateur,
- la définition des paramètres liés au stockage des données.

Ces paramètres concernent non seulement l'espace de mémoire nécessaire pour le stockage des données mais aussi au moins un paramètre lié à la qualité de service. Ces paramètres peuvent comprendre, par exemple, un niveau de performance (taux de transfert,...), un taux de disponibilité, un niveau de sécurité sismique, le coût du stockage, un niveau de sécurité (double stockage ou image des données sur un autre disque...).

Cette requête de stockage est alors transmise à un serveur d'allocation de stockage 22 (étape 2).

Afin de permettre une protection optimale, les échanges de données peuvent être sécurisés par l'utilisation d'un protocole de sécurisation tel qu'un protocole « Secure Sockets Layer (SSL) ».

Le serveur d'allocation de stockage 22 réceptionne et analyse alors les différents paramètres de la requête.

Le serveur d'allocation de stockage 22 renvoie alors un message d'accusé de réception au terminal client récapitulant la requête de stockage (étape 3).

Ce message comprend au moins les paramètres suivants:
- un identifiant de serveur,
- l'identifiant de la requête,
- un code de réservation,

L'analyse des paramètres de la requête de stockage débouche également sur la création d'une requête de réservation (étape 4) comprenant au moins les paramètres suivants:
- un identifiant de serveur,
- un code de réservation,
- la taille des données,
- les paramètres correspondant au niveau de qualité requis,
- des paramètres de service.

Les paramètres de service sont des paramètres additionnels créés par le serveur d'allocation et comprenant, par exemple, un identifiant de contrat, un emplacement ou tout paramètre nécessaire à la recherche d'espace de stockage.

Cette requête de réservation est alors diffusée à tous les agents de stockage 24 (étape 5). Ces derniers sont rattachés à des unités de stockage 26 comprenant des espaces de stockage de données. Ces unités ne nécessitent pas d'équipements spéciaux, ainsi n'importe quelle unité de stockage connectée au réseau Internet peut être utilisée par la présente invention.

Les agents de stockage 24 recherchent alors les espaces de stockage correspondant à la requête et réservent ces espaces en cas de disponibilité (étape 6).

Pour chaque espace de stockage trouvé, les agents de stockage 24 renvoient alors une réponse au serveur d'allocation de stockage 22 (étape 7) comprenant au moins:
- l'identifiant de l'espace de stockage,
- l'adresse de l'espace de stockage,
- un code d'acceptation de la requête de stockage,
- la durée de validité de l'acceptation,
- le code de réservation.

Si aucun espace de stockage ne correspond à la requête de réservation, une réponse négative est renvoyée au serveur d'allocation de stockage 22.

Si aucune réponse positive n'est reçue par le serveur d'allocation de stockage 22, un message d'échec de la requête de stockage est renvoyé au terminal client 20 (étape 8).

Dans le cas contraire, les différentes réponses positives des agents de stockage sont réceptionnées par le serveur d'allocation de stockage 22. Les données des différentes réponses sont alors traitées de manière à sélectionner l'espace de stockage correspondant le mieux à la requête (étape 9). Si deux réponses sont équivalentes, un critère préférentiel peut être sélectionné afin d'affiner la sélection pour obtenir la solution optimale. Les deux réponses peuvent également être proposées à l'utilisateur afin que ce dernier choisisse lui-même.

Lorsque la solution optimale est obtenue, un message de confirmation est renvoyé à l'agent de stockage 24 correspondant (étape 10).

Ce message de confirmation contient au moins les paramètres suivants:
- le code de réservation,
- une clé de réservation,
- l'identifiant utilisateur,
- l'identifiant de serveur,
- le code d'acceptation de la requête de stockage.

Parallèlement, un message d'annulation est envoyé aux agents de stockage 24 dont la réponse n'a pas été sélectionnée (étape 11).

Le serveur d'allocation de stockage 22 renvoie alors au terminal client 20 un message (étape 12) contenant au moins les paramètres suivants:
- l'adresse de l'espace de stockage sélectionné,
- la clé de réservation.

L'utilisation d'une clé de réservation permet ainsi au terminal client d'envoyer directement les données à l'espace de stockage (étape 13), sans qu'il n'y ait d'intermédiaires.

Cet envoi comprend au moins les paramètres suivants:
- les données à stocker,
- la clé de réservation,

Un protocole de cryptographie, comme par exemple un protocole « Pretty Good Privacy (PGP) » permet d'assurer la confidentialité et la sécurité des données échangées.

Le terminal client 20 envoie alors un message de fin de transaction au serveur d'allocation de stockage 22 (étape 14).

Afin de mieux comprendre la présente invention, un exemple d'un mode de réalisation va être décrit dans la suite de la description.

Un utilisateur désire stocker, d'une part des fichiers musicaux et d'autre part des documents professionnels importants. Ainsi, les qualités de service requises pour les deux types de données sont différents.

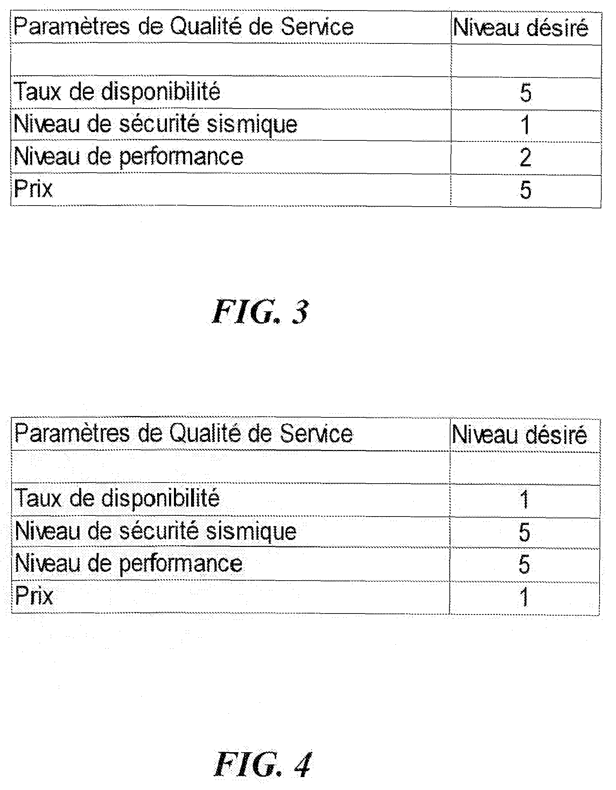

Grâce à la présente invention, l'utilisateur peut définir deux qualités de service différentes. D'une part, pour les fichiers musicaux, il peut, par exemple, définir un niveau de sécurité standard mais vouloir un taux de disponibilité élevé comme représenté sur la Fig.3. A chaque paramètre de qualité de service, l'utilisateur sélectionne un niveau prédéfini. Le niveau 1 correspond au niveau le plus faible et le niveau 5 au niveau le plus important. Ainsi un niveau 5 de disponibilité signifiera que l'accès est disponible en permanence et que les interruptions sont quasi-inexistantes. A l'inverse un niveau 1 correspondra à une disponibilité faible. Pour le prix, un niveau 1 signifiera que le coût de revient n'est pas prioritaire alors que pour un niveau 5, le coût sera prépondérant par rapport à d'autres paramètres. Dans le présent cas, l'utilisateur privilégie la disponibilité et le prix et ne requiert pas un niveau de protection sismique ou de performance élevé. Ainsi, il formulera une première requête de stockage comprenant ces paramètres. D'autre part, pour les fichiers professionnels importants, il voudra un niveau de sécurité maximal. Une deuxième requête de stockage comprenant des paramètres adaptés à ces besoins comme décrit sur la Fig.4 sera alors réalisée. Dans cette requête, le niveau de sécurité sismique et de performance recherché sont maximal alors que le prix et la disponibilité sont moins importants.

Ces requêtes de stockage sont effectuées par l'utilisateur à partir de son terminal 20 puis envoyées à un serveur d'allocation de stockage 22. Ce dernier analyse les deux requêtes de stockage. Cette analyse peut déboucher sur une sélection d'agents de stockage 24 auxquels une requête de réservation va être envoyée. En effet, si un niveau de sécurité élevé est demandé comme dans le cas des fichiers professionnels importants du présent exemple, le serveur ne sélectionnera que les agents de stockage 24 des espaces de stockage susceptibles de fournir la prestation requise. Ainsi l'analyse des deux requêtes de stockage conduit à la création de deux requêtes de réservation correspondantes et envoyées à deux groupes d'agents de stockage sélectionnés par le serveur d'allocation de stockage 22, chaque groupe dépendant des paramètres de stockage choisis.

Les agents de stockage 24 reçoivent la requête de réservation et recherchent, dans le ou les unités de stockage 26 auxquelles ils sont rattachés, la disponibilité d'un espace de stockage correspondant aux paramètres de la requête de réservation.

Si un tel espace est disponible, une réservation est effectuée. Cette réservation est momentanée en attendant la confirmation du serveur d'allocation de stockage 22. La durée de cette réservation momentanée peut, par exemple, être définie par le serveur d'allocation de stockage 22 dans les paramètres de la requête de réservation.

Une réponse contenant les espaces disponibles et réservés est ensuite renvoyée au serveur d'allocation de stockage 22. Ce dernier collecte les réponses des différents agents de stockage 24 puis sélectionne parmi ces réponses la plus appropriée à la requête. Dans le présent exemple, l'espace de stockage le plus approprié aux fichiers musicaux peut, par exemple, se situer en Asie alors que l'espace le plus approprié pour les fichiers professionnels importants peut se situer en Suisse dans un abri anti-sismique.

Une confirmation est alors envoyée aux agents de stockage 24 correspondant aux réponses sélectionnées afin de réserver définitivement l'espace de stockage. De la même manière, un message d'annulation est envoyé aux autres agents de stockage 24 ayant renvoyés une réponse. Une réponse à la requête de stockage est alors envoyée au terminal client 20 comprenant l'adresse des espaces stockage sélectionnés et une clé pouvant être cryptée permettant l'accès à l'espace de stockage. Les adresses peuvent être, par exemple, des adresses Internet Protocol (IP) correspondants aux espaces de stockage. L'utilisateur peut alors envoyer directement ses données vers les espaces de stockage sélectionnés.

Ainsi, la présente invention permet à un utilisateur de pouvoir sélectionner une qualité de service correspondant à ses besoins et par le biais du serveur d'allocation de stockage de connaître l'espace de stockage correspondant le mieux aux critères sélectionnés. De plus, la présente invention permet également un transfert direct des données du terminal client vers l'espace de stockage sélectionné, optimisant ainsi la sécurité et la confidentialité des données.

## Revendications

1. Procédé de réservation d'un espace de stockage de données en ligne, **caractérisé en ce qu'**il comprend:
- la réception d'une requête de stockage contenant un ensemble de paramètres dont au moins un paramètre correspondant à une qualité de service de stockage,
- l'analyse dudit ensemble de paramètres,
- la création et la transmission vers des unités de stockage de données en ligne (26) d'une requête de réservation correspondant à cet ensemble de paramètres,
- la réception d'au moins une réponse à la requête de réservation venant des unités de stockage de données en ligne,
- la sélection, parmi les réponses reçues, d'une unité de stockage en ligne (26) en fonction de l'ensemble des paramètres définis dans la requête de stockage,
- la création d'une clé de réservation permettant l'accès à l'espace de stockage sélectionné,
- la transmission de ladite clé de réservation et de l'adresse de l'espace de stockage sélectionné,
ladite clé de réservation étant cryptée,
la création d'une requête de stockage comprenant:
- un identifiant de ladite requête,
- un identifiant utilisateur,
- la définition de la taille de l'espace de stockage et la qualité de service associée.

2. Procédé de réservation d'un espace de stockage de données en ligne selon la revendication 1, dans lequel ledit au moins un paramètre correspondant à une qualité de service associée comprend au moins un paramètre de la liste suivante:
- un taux de disponibilité,
- un niveau de performance,
- un niveau de sécurité sismique,
- un coût du stockage,
- un niveau de performance.

3. Procédé de réservation d'un espace de stockage de données en ligne selon l'une des revendications précédentes dans lequel les échanges de données sont sécurisés par l'utilisation d'un protocole de sécurisation.

4. Procédé de réservation d'un espace de stockage de données en ligne selon l'une des revendications précédentes dans lequel la confidentialité des données est assurée par l'utilisation d'un programme de cryptographie.

5. Système comprenant un terminal client (20) et un serveur d'allocation de stockage (22), dans lequel le serveur d'allocation de stockage (22) comprend au moins un moyen de traitement adapté pour:
- la réception d'une requête de stockage contenant un ensemble de paramètres dont au moins un paramètre correspondant à une qualité de service de stockage,
- l'analyse dudit ensemble de paramètres,
- la création et la transmission vers des unités de stockage de données en ligne (26) d'une requête de réservation correspondant à cet ensemble de paramètres,
- la réception d'au moins une réponse à la requête de réservation venant des unités de stockage de données en ligne,
- la sélection, parmi les réponses reçues, d'une unité de stockage en ligne (26) en fonction de l'ensemble des paramètres définis dans la requête de stockage,
- la création d'une clé de réservation permettant l'accès à l'espace de stockage sélectionné,
- la transmission de ladite clé de réservation et de l'adresse de l'espace de stockage sélectionné,
le terminal client (20) comprenant au moins un moyen de traitement adapté permettant:
- la création d'une requête de stockage contenant un ensemble de paramètres dont au moins un paramètre correspondant à une qualité de service de stockage,
- la transmission de ladite requête de stockage vers un serveur d'allocation de stockage,
- la réception d'une adresse d'un espace de stockage et d'une clé de réservation,
ladite clé de réservation étant cryptée,
la création d'une requête de stockage comprenant:
- un identifiant de ladite requête,
- un identifiant utilisateur,
- la définition de la taille de l'espace de stockage et la qualité de service associée.

## Patentansprüche

1. Verfahren zur Reservierung von Speicherplatz für Onlinedaten, **dadurch gekennzeichnet, dass** es umfasst:
- den Empfang einer Anforderung von Speicherplatz, einen Satz von Parametern umfassend, wobei mindestens ein Parameter für eine Speicherdienstgüte steht,
- die Analyse besagten Satzes von Parametern,
- das Erstellen einer Reservierungsanforderung, die besagtem Satz von Parametern entspricht, und ihre Übermittlung zu den Speichereinheiten für Onlinedaten (26),
- den Empfang mindestens einer von den Speichereinheiten für Onlinedaten kommenden Antwort auf die Reservierungsanforderung,
- die Auswahl einer Speichereinheit für Onlinedaten aus den erhaltenen Antworten unter Anwendung des in der Anforderung von Speicherplatz definierten Satzes von Parametern,
- das Erstellen eines Reservierungsschlüssels, welcher den Zugang zum ausgewählten Speicherplatz ermöglicht,
- die Übermittlung besagten Reservierungsschlüssels und der Adresse des ausgewählten Speicherplatzes,
wobei besagter Reservierungsschlüssel verschlüsselt ist,
wobei das Erstellen der Anforderung von Speicherplatz umfasst:
- eine Kennung besagter Anforderung,
- eine Nutzungskennung,
- das Definieren der Größe des Speicherplatzes und der assoziierten Dienstgüte.

2. Verfahren zur Reservierung von Speicherplatz für Onlinedaten nach Anspruch 1, wobei der besagte, mindestens eine Parameter zu einer assoziierten Dienstgüte mindestens einen Parameter aus der folgenden Liste umfasst:
- eine Verfügbarkeitsrate,
- eine Leistungsstufe,
- eine Erdbebensicherheitsstufe,
- die Speicherkosten,
- eine Leistungsstufe.

3. Verfahren zur Reservierung von Speicherplatz für Onlinedaten nach einem jeglichen der vorgenannten Ansprüche, wobei der Austausch von Daten durch die Anwendung eines Sicherheitsprotokolls geschützt ist.

4. Verfahren zur Reservierung von Speicherplatz für Onlinedaten nach einem jeglichen der vorgenannten Ansprüche, wobei die Vertraulichkeit der Daten durch die Anwendung eines Verschlüsselungsprogramms gewährleistet ist.

5. System, ein Kundenendgerät (20) und einen Server für die Zuweisung von Speicherplatz (22) umfassend, wobei besagter Server für die Zuweisung von Speicherplatz (22) mindestens ein Datenverarbeitungsmittel umfasst, das ausgelegt ist für:
- den Empfang einer Anforderung von Speicherplatz, einen Satz von Parametern umfassend, wobei mindestens ein Parameter für eine Speicherdienstgüte steht,
- die Analyse besagten Satzes von Parametern,
- das Erstellen einer Reservierungsanforderung, die besagtem Satz von Parametern entspricht, und ihre Übermittlung zu den Speichereinheiten für Onlinedaten (26),
- den Empfang mindestens einer von den Speichereinheiten für Onlinedaten kommenden Antwort auf die Reservierungsanforderung,
- die Auswahl einer Speichereinheit für Onlinedaten (26) aus den erhaltenen Antworten unter Anwendung des in der Anforderung von Speicherplatz definierten Satzes von Parametern,
- das Erstellen eines Reservierungsschlüssels, welcher den Zugang zum ausgewählten Speicherplatz ermöglicht,
- die Übermittlung besagten Reservierungsschlüssels und der Adresse des ausgewählten Speicherplatzes,
wobei das Kundenendgerät (20) mindestens ein Datenverarbeitungsmittel umfasst, welches dafür ausgelegt ist, um zu ermöglichen:
- das Erstellen einer Anforderung von Speicherplatz, einen Satz von Parametern umfassend, wobei mindestens ein Parameter für eine Speicherdienstgüte steht,
- die Übermittlung besagter Anforderung von Speicherplatz an einen Server für die Zuweisung von Speicherplatz,
- den Empfang einer Speicherplatzadresse und eines Reservierungsschlüssels, wobei besagter Reservierungsschlüssel verschlüsselt ist,
wobei das Erstellen einer Anforderung von Speicherplatz umfasst:
- eine Kennung besagter Anforderung,
- eine Nutzungskennung,
- das Definieren der Größe des Speicherplatzes und der assoziierten Dienstgüte.

## Claims

1. A method of reserving online data storage space, **characterized in that** it comprises:
- the receiving of a storage request containing a set of parameters of which at least one parameter corresponds to a storage quality of service,
- the analysis of said set of parameters,
- the creation and transmission to online data storage units (26) of a reservation request corresponding to that set of parameters,
- the receiving of at least one response to the reservation request coming from the online storage units,
- the selection, from among the responses received, of an online storage unit (26) based on all of the parameters defined in the storage request,
- the creation of a reservation key enabling access to the selected storage space,
- the transmission of said reservation key and the address of the selected storage space,
said reservation key being encrypted,
the creation of a storage request comprising:
- an identifier for said request,
- a user identifier,
- the definition of the size of the storage space and the associated quality of service.

2. A method of reserving online data storage space according to claim 1, wherein said at least one parameter corresponding to an associated quality of service comprises at least one parameter from the following list:
- an uptime rate,
- a level of performance,
- a seismic safety level,
- a storage cost,
- a level of performance.

3. A method of reserving online data storage space according to one of the preceding claims, wherein the data exchanges are made secure by using a security protocol.

4. A method of reserving online data storage space according to one of the preceding claims, wherein the confidentiality of the data is ensured through the use of a cryptography program.

5. A system comprising a client terminal (20) and a storage allocation server (22), wherein the storage allocation server (22) comprises at least one processing means suitable for:
- the receiving of a storage request containing a set of parameters of which at least one parameter corresponds to a storage quality of service,
- the analysing of said set of parameters,
- the creation and transmission to online data storage units (26) of a reservation request corresponding to that set of parameters,
- the receiving of at least one response to the reservation request coming from the online storage units,
- the selection, from among the responses received, of an online storage unit (26) based on all of the parameters defined in the storage request,
- the creation of a reservation key enabling access to the selected storage space,
- the transmission of said reservation key and the address of the selected storage space,
the client terminal (20) comprising at least one processing means suitable for:
- the transmission of said storage request to a storage allocation server,
- the receiving of an address of a storage space and a reservation key,
said reservation key being encrypted,
the creation of a storage request comprising:
- an identifier of said request,
- a user identifier,
- the definition of the size of the storage space and the associated quality of service.
